# EUROPEAN PATENT SPECIFICATION

(11) **EP 3 897 094 B1**
(45) Date of publication and mention of the grant of the patent: **25.12.2024**
(21) Application number: 19805099.9
(22) Date of filing: 30.10.2019
(51) Int. Cl.: A01D 41/14

(54) **ARM ASSEMBLY OF AN AGRICULTURAL HEADER**
ARMANORDNUNG EINES LANDWIRTSCHAFTLICHEN ERNTEVORSATZES
ENSEMBLE BRAS D'UNE MOISSONNEUSE AGRICOLE

(30) Priority: 19.12.2018 US 201862782095 P
(43) Date of publication of application: 27.10.2021
(73) Proprietor: CNH Industrial Belgium NV, 8210 Zedelgem (BE)
(72) Inventor: COOK, Joel, Timothy, Lititz, PA 17543 (US)
(74) Representative: CNH Industrial IP Department
(86) International application number: PCT/US2019/058751
(87) International publication number: WO 2020/131226

(56) References cited:
- WO-A1-2009/136274
- JP-A- H04 185 573
- US-A- 4 124 970
- US-A- 5 464 371

## Description

### BACKGROUND

The present disclosure relates generally to an arm assembly of an agricultural header.

A harvester may be used to harvest agricultural crops, such as barley, beans, beets, carrots, corn, cotton, flax, oats, potatoes, rye, soybeans, wheat, or other plant crops. Furthermore, a combine (e.g., combine harvester) is a type of harvester generally used to harvest certain crops that include grain (e.g., barley, corn, flax, oats, rye, wheat, etc.). During operation of a combine, the harvesting process may begin by removing a plant from a field, such as by using a header. The header may cut the agricultural crops and transport the cut crops to a processing system of the combine.

Certain headers include a cutter bar assembly configured to cut a portion of each crop (e.g., a stalk), thereby separating the cut crop from the soil. The cutter bar assembly may extend along a substantial portion of the width of the header at a forward end of the header. In addition, the cutter bar assembly may include a blade support, a stationary guard assembly, and a moving blade assembly. The moving blade assembly may be fixed to the blade support, and the blade support/moving blade assembly may be driven to oscillate relative to the stationary guard assembly. The moving blade assembly may include multiple blades distributed along the width of the moving blade assembly, and the stationary guard assembly may include multiple guards distributed along the width of the stationary guard assembly. As the moving blade assembly is driven to oscillate, the blades of the moving blade assembly move relative to the guards of the stationary guard assembly. As the header is moved through the field by the harvester, a portion of a crop (e.g., the stalk) may enter a gap between adjacent guards of the stationary guard assembly and a gap between adjacent blades of the moving blade assembly. Movement of the moving blade assembly causes a blade of the moving blade assembly to move across the gap in the stationary guard assembly, thereby cutting the portion of the crop.

Certain cutter bar assemblies are flexible along the width of the header. Such a cutter bar assembly may be supported by multiple longitudinally extending arms distributed along the width of the header. Each arm may be pivotally mounted to a frame of the header, thereby enabling the cutter bar assembly to flex during operation of the harvester. The flexible cutter bar assembly may follow the contours of the field, thereby enabling the cutting height to be substantially constant along the width of the header. Typically, each arm is pivotally mounted to the frame by a pivot joint. To establish a substantially straight cutter bar assembly (e.g., a cutter bar assembly having a substantially constant fore-aft position relative to the header frame), each pivot joint is precisely positioned on the header frame. Unfortunately, the process of precisely positioning each pivot joint may be complex and time-consuming, thereby increasing the manufacturing cost of the header. In addition, pivot joints typically include a bushing which may wear over time, thereby increasing maintenance operations (e.g., associated with periodically replacing the bushing).

WO2009136274A1 discloses a harvesting machine comprising a harvesting header. The header comprises a header frame and an arm assembly, wherein the arm assembly comprises an arm and an actuator. The arm is configured to support a cutter bar assembly of the agricultural header. The actuator is coupled to the frame and to the arm, wherein the actuator is configured to urge the arm to move the cutter bar assembly upwardly relative to a soil surface.

### BRIEF DESCRIPTION

In accordance with the claimed invention, an arm assembly of an agricultural header includes a leaf spring configured to couple to a frame of the agricultural header. The arm assembly also includes an arm coupled to the leaf spring, in which the arm is configured to support a cutter bar assembly of the agricultural header. In addition, the arm assembly includes an actuator coupled to the arm and configured to couple to the frame of the agricultural header. The actuator is configured to urge the arm to move the cutter bar assembly upwardly relative to a soil surface, and the arm assembly is configured to be coupled to the frame only by the leaf spring and the actuator.

### DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural harvester having a header;
FIG. 2 is a perspective view of an embodiment of a header that may be employed within the agricultural harvester of FIG. 1;
FIG. 3 is a perspective view of a portion of the header of FIG. 2, including a cutter bar assembly and arm assemblies that support the cutter bar assembly;
FIG. 4 is a perspective view of the cutter bar assembly of FIG. 3;
FIG. 5 is a side view of an embodiment of an arm assembly that may be employed within the header of FIG. 2;
FIG. 6 is a side view of another embodiment of an arm assembly that may be employed within the header of FIG. 2, in which an arm of the arm assembly is in a lowered position; and
FIG. 7 is a side view of the arm assembly of FIG. 6, in which the arm of the arm assembly is in a raised position.

### DETAILED DESCRIPTION

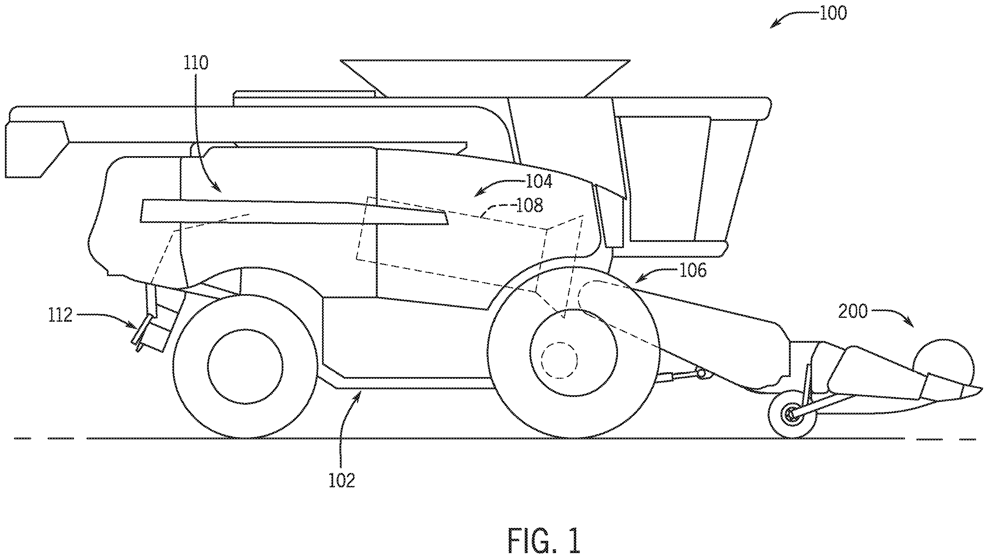

Turning to the drawings, FIG. 1 is a side view of an embodiment of an agricultural harvester 100 having a header 200 (e.g., agricultural header). The agricultural harvester 100 includes a chassis 102 configured to support the header 200 and an agricultural crop processing system 104. As described in greater detail below, the header 200 is configured to cut crops and to transport the cut crops toward an inlet 106 of the agricultural crop processing system 104 for further processing of the cut crops. The agricultural crop processing system 104 receives cut crops from the header 200 and separates desired crop material from crop residue. For example, the agricultural crop processing system 104 may include a thresher 108 having a cylindrical threshing rotor that transports the crops in a helical flow path through the harvester 100. In addition to transporting the crops, the thresher 108 may separate certain desired crop material (e.g., grain) from the crop residue, such as husks and pods, and enable the desired crop material to flow into a cleaning system located beneath the thresher 108. The cleaning system may remove debris from the desired crop material and transport the desired crop material to a storage compartment within the harvester 100. The crop residue may be transported from the thresher 108 to a crop residue handling system 110, which may remove the crop residue from the harvester 100 via a crop residue spreading system 112 positioned at the aft end of the harvester 100.

As discussed in detail below, the header 200 includes a cutter bar assembly configured to cut the crops within the field. The cutter bar assembly is configured to flex along a width of the header to enable the cutter bar assembly to substantially follow the contours of the field. The cutter bar assembly is supported by multiple arm assemblies distributed along the width of the header. In accordance with the claimed invention, each arm assembly includes a leaf spring, an arm, and an actuator. The leaf spring is coupled to a frame of the header, and the arm is coupled to the leaf spring. In addition, the arm supports the cutter bar assembly. The actuator is coupled to the arm and to the frame of the header, and the actuator is configured to urge the arm to move the cutter bar assembly upwardly relative to the soil surface. The leaf spring and the actuator enable each arm to rotate and/or move vertically relative to the header frame, thereby enabling the cutter bar assembly, which is supported by the arms, to flex in response to variations in the contours of the field.

In accordance with the claimed invention, the arm assembly is coupled to the header frame only by the leaf spring and the actuator. Accordingly, the leaf spring and the actuator may enable the arm to move along a longitudinal axis in response to contact between the cutter bar assembly and an obstacle, thereby absorbing energy associated with the contact. In addition, a pivot joint, which may be used in certain headers to pivotally couple an arm to the header frame, may be omitted. As a result, the time and complexity associated with positioning each arm relative to the header frame to establish a substantially straight cutter bar assembly (e.g., a cutter bar assembly having a substantially constant longitudinal position relative to the header frame) may be substantially reduced, as compared to precisely positioning the pivot joint on the frame to establish the substantially straight cutter bar assembly. In addition, maintenance operations may be substantially reduced, as compared to utilizing a pivot joint having a bushing that may be periodically replaced due to wear.

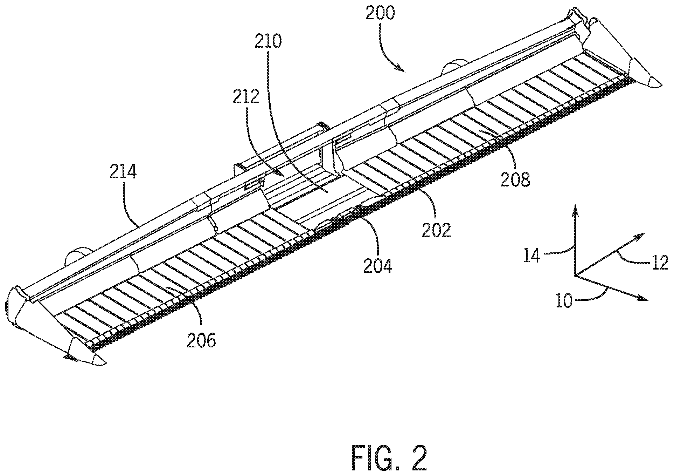

FIG. 2 is a perspective view of an embodiment of a header 200 that may be employed within the agricultural harvester of FIG. 1. In the illustrated embodiment, the header 200 includes a cutter bar assembly 202 configured to cut a portion of each crop (e.g., a stalk), thereby separating the crop from the soil. The cutter bar assembly 202 is positioned at a forward end of the header 200 relative to a longitudinal axis 10 of the header 200. As illustrated, the cutter bar assembly 202 extends along a substantial portion of the width of the header 200 (e.g., the extent of the header 200 along a lateral axis 12). As discussed in detail below, the cutter bar assembly includes a blade support, a stationary guard assembly, and a moving blade assembly. The moving blade assembly is fixed to the blade support (e.g., above the blade support relative to a vertical axis 14 of the header 200), and the blade support/moving blade assembly is driven to oscillate relative to the stationary guard assembly. In the illustrated embodiment, the blade support/moving blade assembly is driven to oscillate by a driving mechanism 204 positioned at the lateral center of the header 200. However, in other embodiments, the blade support/moving blade assembly may be driven by another suitable mechanism (e.g., located at any suitable position on the header). As the harvester is driven through a field, the cutter bar assembly 202 engages crops within the field, and the moving blade assembly cuts the crops (e.g., the stalks of the crops) in response to engagement of the cutter bar assembly 202 with the crops.

In the illustrated embodiment, the header 200 includes a first lateral belt 206 on a first lateral side of the header 200 and a second lateral belt 208 on a second lateral side of the header 200, opposite the first lateral side. Each belt is driven to rotate by a suitable drive mechanism, such as an electric motor or a hydraulic motor. The first lateral belt 206 and the second lateral belt 208 are driven such that the top surface of each belt moves laterally inward. In addition, the header 200 includes a longitudinal belt 210 positioned between the first lateral belt 206 and the second lateral belt 208 along the lateral axis 12. The longitudinal belt 210 is driven to rotate by a suitable drive mechanism, such as an electric motor or a hydraulic motor. The longitudinal belt 210 is driven such that the top surface of the longitudinal belt 210 moves rearwardly along the longitudinal axis 10. In certain embodiments, the crops cut by the cutter bar assembly 202 are directed toward the belts by a reel assembly. Agricultural crops that contact the top surface of the lateral belts are driven laterally inwardly to the longitudinal belt due to the movement of the lateral belts. In addition, agricultural crops that contact the longitudinal belt 210 and the agricultural crops provided to the longitudinal belt by the lateral belts are driven rearwardly along the longitudinal axis 10 due to the movement of the longitudinal belt 210. Accordingly, the belts move the cut agricultural crops through an opening 212 in the header 200 to the inlet of the agricultural crop processing system.

In the illustrated embodiment, the cutter bar assembly 202 is flexible along the width of the header 200 (e.g., the extent of the header 200 along the lateral axis 12). As discussed in detail below, the cutter bar assembly 202 is supported by multiple arm assemblies distributed along the width of the header 200 (e.g., along the lateral axis 12 of the header 200). Each arm assembly is mounted to a frame 214 of the header 200 and includes an arm configured to rotate and/or move along the vertical axis 14 relative to the frame. Each rotatable/movable arm is coupled to the cutter bar assembly 202, thereby enabling the cutter bar assembly 202 to flex during operation of the harvester. The flexible cutter bar assembly may follow the contours of the field, thereby enabling the cutting height (e.g., the height at which each crop is cut) to be substantially constant along the width of the header 200 (e.g., the extent of the header 200 along the lateral axis 12).

In accordance with the claimed invention, each arm assembly includes a leaf spring coupled to the frame and to the arm of the arm assembly. As previously discussed, the arm is configured to support the cutter bar assembly of the agricultural header. In addition, the arm assembly includes an actuator coupled to the frame and to the arm. The actuator is configured to urge the arm to move the cutter bar assembly upwardly (e.g., along the vertical axis 14) relative to the soil surface. In certain embodiments, the leaf spring is also configured to urge the arm to move the cutter bar assembly upwardly (e.g., along the vertical axis 14) relative to the soil surface. In such embodiments, a smaller/less powerful actuator may be utilized to urge the cutter bar assembly upwardly, thereby reducing the cost of the header, as compared to a configuration in which the upward force is only provided by a larger/move powerful actuator. In further embodiments, the leaf spring may be configured to urge the arm to move the cutter bar assembly downwardly (e.g., along the vertical axis 14) relative to the soil surface, thereby acting against the actuator. In such embodiments, the rate at which the cutter bar assembly moves downwardly to reengage the soil surface after upward deflection (e.g., due to interaction between the cutter bar assembly and an obstacle in the field) may be enhanced.

In accordance with the claimed invention, each arm assembly is coupled to the frame only by the leaf spring and the actuator. Accordingly, a pivot joint, which may be used in certain headers to pivotally couple an arm to the frame, may be omitted. As a result, the time and complexity associated with positioning each arm relative to the header frame to establish a substantially straight cutter bar assembly (e.g., a cutter bar assembly having a substantially constant longitudinal position relative to the header frame) may be substantially reduced, as compared to precisely positioning each pivot joint on the frame to establish the substantially straight cutter bar assembly. In addition, maintenance operations may be substantially reduced, as compared to utilizing pivot joints having respective bushings that may be periodically replaced due to wear.

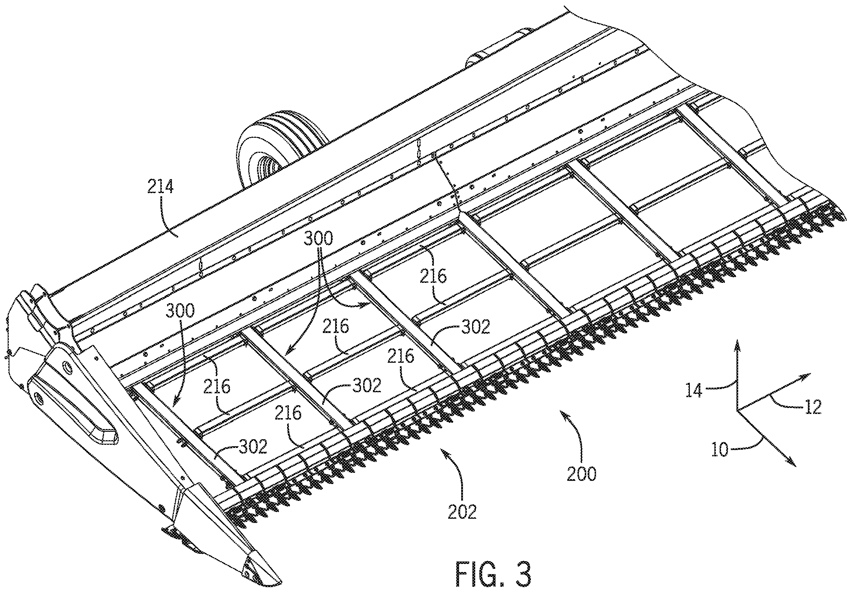

FIG. 3 is a perspective view of a portion of the header 200 of FIG. 2, including the cutter bar assembly 202 and arm assemblies 300 that support the cutter bar assembly 202. As illustrated, each arm assembly 300 includes an arm 302 that extends substantially along the longitudinal axis 10. However, in alternative embodiments, each arm may extend in any suitable direction. In the illustrated embodiment, the arm assemblies 300 are distributed along the width of the header 200 (e.g., the extent of the header along the lateral axis 12). The spacing between the arm assemblies may be selected to enable the arm assemblies to support the cutter bar assembly and to enable the cutter bar assembly to flex during operation of the header. As discussed in detail below, each arm 302 is coupled to the frame 214 by a leaf spring and an actuator of the respective arm assembly. The leaf spring and the actuator enable the arm to rotate and/or move vertically (e.g., along the vertical axis 14) relative to the frame 214, thereby enabling the cutter bar assembly 202, which is supported by the arms 302, to flex in response to variations in the contours of the field.

In the illustrated embodiment, lateral supports 216 extend between respective pairs of arms 302. A first end of each lateral support 216 is pivotally coupled to one arm 302, and a second end of each lateral support 216 is pivotally coupled to another arm 302. The lateral supports 216 are configured to support the respective lateral belt, while enabling the arms to rotate/move relative to the frame 214. While three lateral supports are positioned between each pair of arms in the illustrated embodiment, in other embodiments, more or fewer lateral supports may be positioned between at least one pair of arms (e.g., 1, 2, 3, 4, 5, 6, etc.). Furthermore, in certain embodiments, the lateral supports may be omitted between at least one pair of arms.

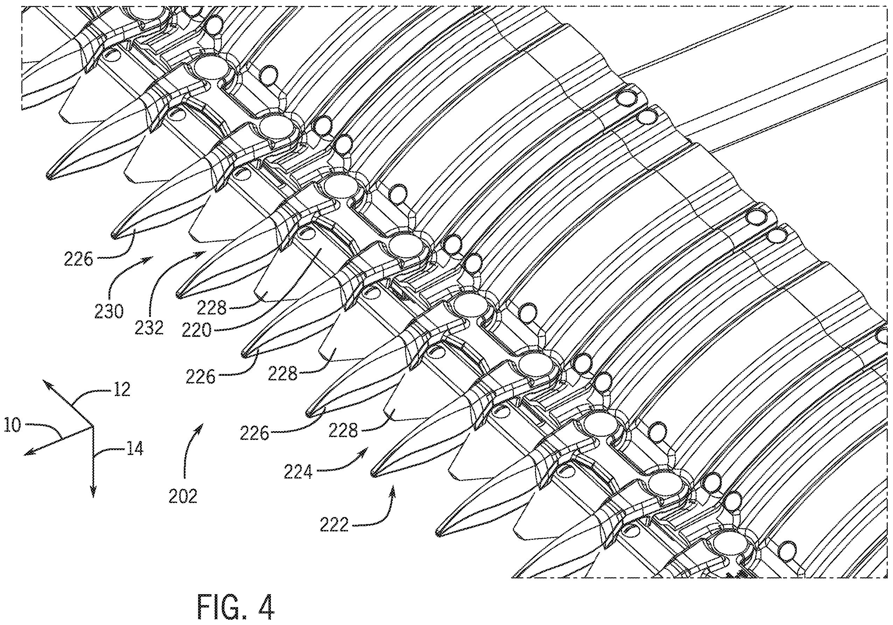

FIG. 4 is a perspective view of the cutter bar assembly 202 of FIG. 3. As illustrated, the cutter bar assembly 202 includes a blade support 220, a stationary guard assembly 222, and a moving blade assembly 224. The moving blade assembly 224 is coupled to the blade support 220, and the blade support 220/moving blade assembly 224 are driven to oscillate relative to the stationary guard assembly 222. The stationary guard assembly 222 includes multiple stationary guards 226 distributed along the width of the stationary guard assembly 222 (e.g., the extent of the stationary guard assembly 222 along the lateral axis 12), and the moving blade assembly 224 includes multiple moving blades 228 distributed along the width of the moving blade assembly 224 (e.g., the extent of the moving blade assembly 224 along the lateral axis 12). As the moving blade assembly 224 is driven to oscillate, the moving blades 228 move relative to the stationary guards 226. As the header is moved through the field by the harvester, a portion of a crop (e.g., the stalk) may enter a gap 230 between adjacent stationary guards 226 and a gap 232 between adjacent moving blades 228. Movement of the moving blade assembly 224 causes a moving blade 228 to move across the gap 230 in the stationary guard assembly 222, thereby cutting the portion of the crop.

In the illustrated embodiment, the stationary guard assembly 222 is coupled to the arms of the arm assemblies via laterally extending support bars. For example, in certain embodiments, the support bars are coupled to the arms via fasteners, and the stationary guards of the stationary guard assembly are coupled to respective support bars by fasteners. In addition, the blade support 220 and the movable blade assembly 224 are movably coupled to the stationary guard assembly 222 (e.g., the blade support and the moving blade assembly pass through openings in the stationary guards). The support bars and the blade support 220 are flexible, thereby enabling the cutter bar assembly 202 to flex in response to variations in the soil surface (e.g., while the cutter bar assembly 202 is in contact with the soil surface). While the cutter bar assembly 202 is coupled to arms via support bars and fasteners in the illustrated embodiment, in other embodiments, the cutter bar assembly may be coupled to the arms via another suitable connection system (e.g., the stationary guard assembly may be welded to the arms, etc.). In addition, the blade support/moving blade assembly may be movably coupled to the stationary guard assembly by any suitable connection system.

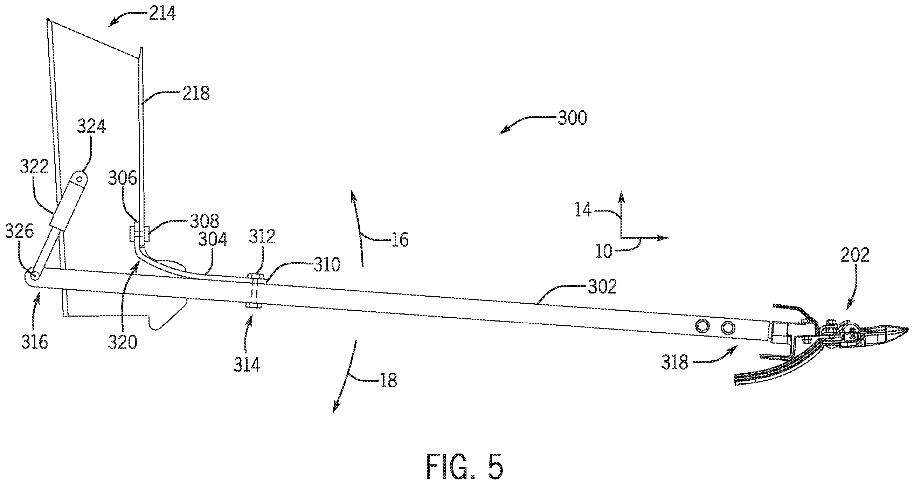

FIG. 5 is a side view of an embodiment of an arm assembly 300 that may be employed within the header of FIG. 2. As previously discussed, the arm assembly 300 includes an arm 302 configured to support the cutter bar assembly 202 of the header. In the illustrated embodiment, the arm is formed from a tube having a substantially rectangular cross-section (e.g., in a plane formed by the vertical and lateral axes). However, in other embodiments, the tube may have another suitable cross-sectional shape, such as elliptical, circular, or hexagonal, among others. Furthermore, while the arm is formed from a tube in the illustrated embodiment, the arm may have another suitable cross-sectional shape in other embodiments (e.g., solid, T-shaped, I-shaped, etc.). In addition, while the cross-sectional area of the arm 302 remains substantially constant along the length of the arm 302 (e.g., the extent of the arm along the longitudinal axis 10), in other embodiments, the cross-sectional area of the arm may vary. For example, the arm may have a wider portion and a narrower portion (e.g., along the lateral axis and/or along the vertical axis).

In the illustrated embodiment, the arm assembly 300 includes a leaf spring 304 coupled to the frame 214 of the header and to the arm 302. The leaf spring 304 is configured to enable the arm to rotate and/or move along the vertical axis 14 relative to the frame 214 of the header. For example, the leaf spring 304 may enable the arm 302 to rotate in a upward direction 16 (e.g., a direction that causes the cutter bar assembly 202 to move upwardly along the vertical axis 14) and in a downward direction 18 (e.g., a direction that causes the cutter bar assembly 202 to move downwardly along the vertical axis 14). Furthermore, the leaf spring 304 may urge the arm 302 toward a neutral position/orientation. Accordingly, if the arm 302 is deflected in the downward direction 18, the leaf spring 304 may urge the arm in the upward direction 16, and if the arm 302 is deflected in the upward direction 16, the leaf spring 304 may urge the arm in the downward direction 18. In certain embodiments, the neutral position is above a lowered/working position of the arm, such that the leaf spring urges the arm in the upward direction 16 while the cutter bar assembly 202 is in contact with the soil surface.

As used herein "leaf spring" refers to an elongated non-rigid (e.g., flexible) element configured to enable the arm to rotate and/or move relative to the header frame at least between the lowered/working position/orientation and a raised/deflected position/orientation (e.g., a position/orientation resulting from contact between the cutter bar assembly and an obstacle within the field) via deflection (e.g., bending) of the leaf spring, and to urge the arm toward the neutral position/orientation in response to deflection (e.g., bending) of the leaf spring. The leaf spring also enables the arm to rotate and/or move relative to the header frame such that the cutter bar assembly may follow the contours of the soil surface. For example, the leaf spring may enable the cutter bar assembly to move through a range of motion (e.g., along the vertical axis) via deflection of the leaf spring, while the leaf spring urges the arm toward the neutral position/orientation. By way of example, the range of motion may be about 1 cm to about 50 cm, about 5 cm to about 40 cm, or about 10 cm to about 30 cm. The leaf spring may be formed from any suitable resilient material, such as metal (e.g., spring steel) or a composite material (e.g., including fiber glass, carbon fiber, polymeric fiber, ceramic fiber, etc.). In the absence of external forces, the leaf spring is configured to substantially return to a neutral state (e.g., corresponding to the state of the leaf spring while the arm is in the neutral position/orientation) after deflection (e.g., deflection of the arm to the lowered/working position/orientation, deflection of the arm to the raised/deflected position/orientation, etc.), thereby demonstrating a substantially elastic response to deflection (e.g., as compared to a plastic response in which an element remains in a deflected state after deflection).

In the illustrated embodiment, the leaf spring 304 has a first end 306 coupled (e.g., rigidly coupled) to an element 218 of the frame 214 by a fastener 308. The fastener 308 may be a bolt, a screw, a rivet, or any other suitable type of fastener. While the leaf spring 304 is coupled to the frame element 218 by a single fastener in the illustrated embodiment, in other embodiments, the leaf spring may be coupled to the frame element by any suitable number of fasteners (e.g., 1, 2, 3, 4, 5, 6, or more). Furthermore, in certain embodiments, the leaf spring may be coupled to the frame element by another suitable connection, such as a welded connection, an adhesive connection, a press-fit connection, a connection formed by a clamp, or a combination thereof. For example, the leaf spring may be coupled to the frame element by multiple connections of the same type or of different types. In addition, while the leaf spring 304 is coupled to the frame element 218 at the first end 306 of the leaf spring 304 in the illustrated embodiment, in other embodiments, the leaf spring may be coupled to the frame element at another suitable point along the leaf spring.

In the illustrated embodiment, the leaf spring 304 has a second end 310 coupled (e.g., rigidly coupled) to the arm 302 by a fastener 312. The fastener 312 may be a bolt, a screw, a rivet, or any other suitable type of fastener. While the leaf spring 304 is coupled to the arm 302 by a single fastener in the illustrated embodiment, in other embodiments, the leaf spring may be coupled to the arm by any suitable number of fasteners (e.g., 1, 2, 3, 4, 5, 6, or more). Furthermore, in certain embodiments, the leaf spring may be coupled to the arm by another suitable connection, such as a welded connection, an adhesive connection, a press-fit connection, a connection formed by a clamp, or a combination thereof. For example, the leaf spring may be coupled to the arm by multiple connections of the same type or of different types. In addition, while the leaf spring 304 is coupled to the arm 302 at the second end 310 of the leaf spring 304 in the illustrated embodiment, in other embodiments, the leaf spring may be coupled to the arm at another suitable point along the leaf spring.

In the illustrated embodiment, the leaf spring 304 (e.g., second end 310 of the leaf spring 304) is coupled to a central portion 314 of the arm 302. However, in other embodiments, the leaf spring may be coupled to another suitable portion of the arm. For example, the leaf spring may be coupled to a first end portion 316 of the arm 302, which is positioned opposite from a second end portion 318 of the arm 302 that is coupled to the cutter bar assembly 202. Furthermore, in the illustrated embodiment, the leaf spring 304 has a bent portion 320 that enables the second end 310 of the leaf spring 304 to be angled at least 90 degrees from the first end 306 (e.g., at least while the arm is in the neutral position/orientation). For example, in certain embodiments, the leaf spring may enable the angle of the second end relative to the first end to be about 15 degrees to about 180 degrees, about 30 degrees to about 120 degrees, about 45 degrees to about 110 degrees, or about 75 degrees to about 100 degrees (e.g., at least while the arm is in the neutral position). The angle of the second end relative to the first end may be selected based on the configuration of the leaf spring and/or the orientation of the frame element coupled to the leaf spring, among other factors.

In certain embodiments, the cross-section of the leaf spring 304 may be configured to control the force applied by the leaf spring and/or the location at which the leaf spring bends. For example, a larger cross-sectional area along the leaf spring may provide a greater bending resistance and/or force applied by the leaf spring to the arm (e.g., while the arm is deflected from the neutral position/orientation). In addition, a smaller cross-sectional area along the leaf spring may provide less bending resistance and/or force applied by the leaf spring to the arm (e.g., while the arm is deflected from the neutral position/orientation). Furthermore, the leaf spring may include a bending control section having a smaller cross-section than the remainder of the leaf spring. For example, the bending control section may have a smaller height (e.g., along the vertical axis 14) and/or a smaller width (e.g., along the lateral axis) relative to the remainder of the leaf spring. Due to the smaller cross-sectional area of the bending control section, a substantial portion of the flexing/bending of the leaf spring may occur at the bending control section. The bending control section may be positioned along the leaf spring at a desired location (e.g., at the bent portion 320 of the leaf spring 304). However, in other embodiments, the bending control section may be omitted (e.g., the leaf spring may have a substantially constant cross-sectional shape/area along the length of the leaf spring). Furthermore, in certain embodiments, the arm assembly may include a spring force adjustment system configured to control the force applied by the leaf spring. For example, the spring force adjustment system may include a device (e.g., clamp, etc.) disposed about the leaf spring and configured to control bending and/or the effective length of the leaf spring. In addition, the spring force adjustment system may include an assembly that adjusts the mounting location of the spring (e.g., to the frame and/or to the arm) to control bending and/or the effective length of the leaf spring.

In the illustrated embodiment, the arm assembly 300 includes an actuator 322 coupled to the element 218 of the frame 214 and to the arm 302. The actuator 322 is configured to urge the arm 302 to rotate in the upward direction 16, thereby urging the cutter bar assembly 202 to move upwardly along the vertical axis 14 relative to the soil surface. In the illustrated embodiment, the actuator 322 has a first end 324 coupled (e.g., rotatably coupled) to the frame element 218, and the actuator has a second end 326 coupled (e.g., rotatably coupled) to the first end portion 316 of the arm 302. As previously discussed, the first end portion 316 is positioned opposite the second end portion 318, which is coupled to the cutter bar assembly 202. While the actuator 322 is coupled to the arm 302 at the first end portion 316 in the illustrated embodiment, in other embodiments, the actuator may be coupled to another suitable portion of the arm. For example, the actuator may be coupled to the central portion of the arm.

In the illustrated embodiment, the actuator 322 is a pneumatic cylinder or a hydraulic cylinder. In certain embodiments, the force applied by the pneumatic or hydraulic cylinder to the arm may be adjusted (e.g., by controlling fluid flow to/from the cylinder) to control movement of the arm (e.g., in response to interaction of the cutter bar assembly with the soil surface). While the actuator is a pneumatic or hydraulic cylinder in the illustrated embodiment, in other embodiments, the actuator may include any suitable device configured to urge (e.g., selectively urge) the arm 302 to rotate in the upward direction 16. For example, the actuator may include a spring (e.g., a coil spring, a leaf spring, a tension spring, a compression spring, etc.) configured to urge the arm to rotate in the upward direction. In such embodiments, the spring may be adjustable (e.g., the force applied by the spring may be adjustable) to control the force applied by the spring to the arm. Furthermore, the actuator may include multiple devices configured to urge the arm to rotate in the upward direction. For example, the actuator may include one or more pneumatic cylinders, one or more hydraulic cylinders, one or more springs, one or more other suitable biasing elements (e.g., a resilient element, an electromechanical actuator, etc.), or a combination thereof.

In the illustrated embodiment, the arm assembly 300 is coupled to the header frame 214 (e.g., the element 218 of the frame 214) only by the leaf spring 304 and the actuator 322. Accordingly, the leaf spring 304 and the actuator 322 may enable the arm 302 to move along the longitudinal axis 10 in response to contact between the cutter bar assembly 202 and an obstacle. For example, contact between the cutter bar assembly 202 and an obstacle in the field may drive the arm 302 rearwardly along the longitudinal axis 10 relative to the direction of travel. In response, the actuator 322 may be driven to extend and the leaf spring 304 may be driven to deform, thereby absorbing energy associated with the contact. As a result, the energy applied to the cutter bar assembly 202 and the frame 214 by the obstacle may be reduced.

In addition, a pivot joint, which may be used in certain headers to pivotally couple an arm to the header frame, may be omitted. As a result, the time and complexity associated with positioning each arm relative to the header frame to establish a substantially straight cutter bar assembly (e.g., a cutter bar assembly having a substantially constant longitudinal position relative to the header frame) may be substantially reduced. For example, in headers that employ pivot joints to couple the arms to the header frame, the frame is machined to precisely locate each pivot joint on the frame to establish the substantially straight cutter bar assembly. However, in the illustrated embodiment, the longitudinal position of each arm may be adjusted by controlling the connection point between the leaf spring and the arm to establish the substantially straight cutter bar assembly. For example, the arm may include a slot configured to receive the leaf spring/arm fastener 312. While the fastener is loose, the longitudinal position of the arm may be adjusted to establish the substantially straight cutter bar assembly. The fastener 312 may then be tightened to secure the arm in the desired longitudinal position. The process of adjusting the position of each arm may be significantly less complex and time-consuming than precisely machining the header frame to locate the pivot joints. In addition, each pivot joint may include a bushing configured to reduce friction associated with pivoting of the arm. However, the bushings may be periodically replaced due to wear, which may be an expensive and time-consuming process. Accordingly, by omitting the pivot joints, maintenance operations on the header may be substantially reduced.

While one arm assembly of the header is described above, the actuator/leaf spring connection between the arm and the header frame may be utilized with one or more other arm assemblies of the header. For example, in certain embodiments, each arm assembly of the header may utilize an actuator/leaf spring connection between the arm and the header frame. Furthermore, while the actuator and the leaf spring are coupled to the same component of the header frame (e.g., the frame element 218) in the illustrated embodiment, in other embodiments, the actuator may be coupled to one component of the frame, and the leaf spring may be coupled to another component of the frame. In addition, while the leaf-spring is substantially L-shaped in the illustrated embodiment, in other embodiments, the leaf spring may have another suitable shape (e.g., substantially straight, having one or more curves, etc.) for connecting the arm to the frame of the header.

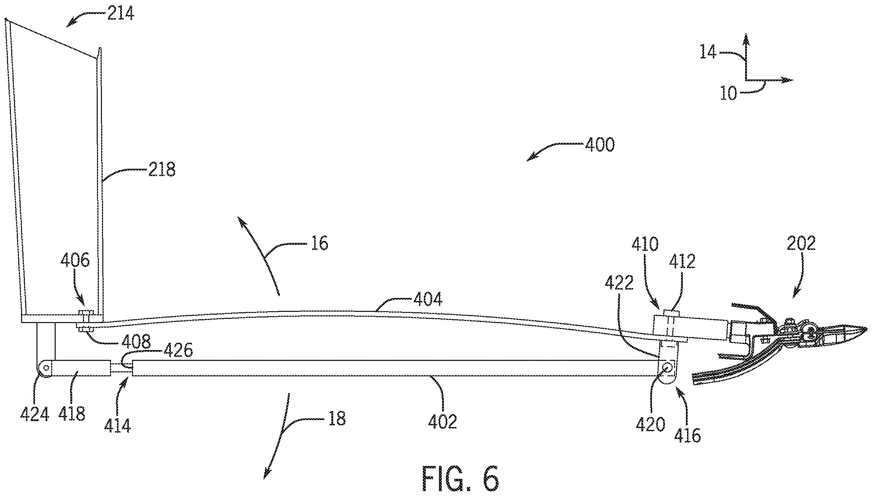

FIG. 6 is a side view of another embodiment of an arm assembly 400 that may be employed within the header of FIG. 2, in which an arm 402 of the arm assembly 400 is in a lowered position. Similar to the embodiment described above with reference to FIG. 5, the arm 402 is configured to support the cutter bar assembly 202. In the illustrated embodiment, the arm is formed from a tube having a substantially rectangular cross-section (e.g., in a plane formed by the vertical and lateral axes). However, in other embodiments, the tube may have another suitable cross-sectional shape, such as elliptical, circular, or hexagonal, among others. Furthermore, while the arm is formed from a tube in the illustrated embodiment, the arm may have another suitable cross-sectional shape in other embodiments (e.g., solid, T-shaped, I-shaped, etc.). In addition, while the cross-sectional area of the arm 402 remains substantially constant along the length of the arm 402 (e.g., the extent of the arm along the longitudinal axis 10), in other embodiments, the cross-sectional area of the arm may vary. For example, the arm may have a wider portion and a narrower portion (e.g., along the lateral axis and/or along the vertical axis).

In the illustrated embodiment, the arm assembly 400 includes a leaf spring 404 coupled to the frame 214 (e.g., the element 218 of the frame 214) and to the arm 402. The leaf spring 404 is configured to enable the arm to rotate and/or move along the vertical axis 14 relative to the frame 214 of the header. For example, the leaf spring 404 may enable the arm 402 to rotate/move in the upward direction 16 and in the downward direction 18. Furthermore, the leaf spring 404 may urge the arm 402 toward a neutral position/orientation. Accordingly, if the arm 402 is deflected in the downward direction 18, the leaf spring 404 may urge the arm in the upward direction 16, and if the arm 402 is deflected in the upward direction 16, the leaf spring 404 may urge the arm in the downward direction 18. In certain embodiments, the neutral position is above the illustrated lowered/working position, such that the leaf spring urges the arm in the upward direction 16 while the cutter bar assembly 202 is in contact with the soil surface.

In the illustrated embodiment, the leaf spring 404 has a first end 406 coupled (e.g., rigidly coupled) to the frame element 218 by a fastener 408. The fastener 408 may be a bolt, a screw, a rivet, or any other suitable type of fastener. While the leaf spring 404 is coupled to the frame element 218 by a single fastener in the illustrated embodiment, in other embodiments, the leaf spring may be coupled to the frame element by any suitable number of fasteners (e.g., 1, 2, 3, 4, 5, 6, or more). Furthermore, in certain embodiments, the leaf spring may be coupled to the frame element by another suitable connection, such as a welded connection, an adhesive connection, a press-fit connection, a connection formed by a clamp, or a combination thereof. For example, the leaf spring may be coupled to the frame element by multiple connections of the same type or of different types. In addition, while the leaf spring 404 is coupled to the frame element 218 at the first end 406 of the leaf spring 404 in the illustrated embodiment, in other embodiments, the leaf spring may be coupled to the frame element at another suitable point along the leaf spring.

In the illustrated embodiment, the leaf spring 404 has a second end 410 coupled (e.g., rigidly coupled) to the cutter bar assembly 202 by a fastener 412. The fastener 412 may be a bolt, a screw, a rivet, or any other suitable type of fastener. While the leaf spring 404 is coupled to the cutter bar assembly 202 by a single fastener in the illustrated embodiment, in other embodiments, the leaf spring may be coupled to the cutter bar assembly by any suitable number of fasteners (e.g., 1, 2, 3, 4, 5, 6, or more). Furthermore, in certain embodiments, the leaf spring may be coupled to the cutter bar assembly by another suitable connection, such as a welded connection, an adhesive connection, a press-fit connection, a connection formed by a clamp, or a combination thereof. For example, the leaf spring may be coupled to the cutter bar assembly by multiple connections of the same type or of different types. In addition, while the leaf spring 404 is coupled to the cutter bar assembly 202 at the second end 410 of the leaf spring 404 in the illustrated embodiment, in other embodiments, the leaf spring may be coupled to the cutter bar assembly at another suitable point along the leaf spring.

In the illustrated embodiment, the second end 410 of the leaf spring 404 is also coupled to the arm 402. As illustrated, the arm 402 has a first end portion 414 and a second end portion 416. As discussed in detail below, the first end portion 414 of the arm 402 is coupled to an actuator 418. In addition, the second end portion 416 of the arm 402 is coupled to the cutter bar assembly 202 and to the second end 410 of the leaf spring 404. In the illustrated embodiment, the second end portion 416 of the arm 402 is coupled to the second end 410 of the leaf spring via a pivot joint 420. The pivot joint 420 is formed within a mount 422 that is rigidly coupled to the leaf spring 404. In the illustrated embodiment, the mount 422 is coupled to the leaf spring 404 by the same fastener 412 that couples the leaf spring 404 to the cutter bar assembly 202. However, in other embodiments, the mount may be coupled to the leaf spring and/or to the cutter bar assembly by another suitable connection, such as a welded connection or an adhesive connection, among others. While the second end portion 416 of the arm 402 is pivotally coupled to the leaf spring 404 via the pivot joint 420 of the mount 422 in the illustrated embodiment, in other embodiments, the second end portion of the arm may be pivotally coupled to the leaf spring and the cutter bar assembly by another suitable pivotal connection. For example, in certain embodiments, the second end portion of the arm may be pivotally coupled directly to the cutter bar assembly, or the second end portion of the arm may be pivotally coupled to a mount that is directly and/or rigidly coupled to the cutter bar assembly (e.g., via a welded connection, via an adhesive connection, etc.). In such embodiments, the arm may be pivotally coupled to the leaf spring via the connection between the leaf spring and the cutter bar assembly. Furthermore, while the arm is coupled to the leaf spring at the second end portion of the arm and the second end of the leaf spring in the illustrated embodiment, in other embodiments, the arm may be coupled (e.g., rigidly or pivotally coupled) to the leaf spring at another suitable position along the length of the leaf spring and/or at another suitable position along the length of the arm.

In certain embodiments, the cross-section of the leaf spring 404 may be configured to control the force applied by the leaf spring and/or the location at which the leaf spring bends. For example, a larger cross-sectional area along the leaf spring may provide a greater bending resistance and/or force applied by the leaf spring to the arm/cutter bar assembly (e.g., while the arm is deflected from the neutral position/orientation). In addition, a smaller cross-sectional area along the leaf spring may provide less bending resistance and/or force applied by the leaf spring to the arm/cutter bar assembly (e.g., while the arm is deflected from the neutral position/orientation). Furthermore, the leaf spring may include a bending control section having a smaller cross-section than the remainder of the leaf spring. For example, the bending control section may have a smaller height (e.g., along the vertical axis 14) and/or a smaller width (e.g., along the lateral axis) relative to the remainder of the leaf spring. Due to the smaller cross-sectional area of the bending control section, a substantial portion of the flexing/bending of the leaf spring may occur at the bending control section. The bending control section may be positioned along the leaf spring at a desired location. However, in other embodiments, the bending control section may be omitted (e.g., the leaf spring may have a substantially constant cross-sectional shape/area along the length of the leaf spring). Furthermore, in certain embodiments, the arm assembly may include a spring force adjustment system configured to control the force applied by the leaf spring. For example, the spring force adjustment system may include a device (e.g., clamp, etc.) disposed about the leaf spring and configured to control bending and/or the effective length of the leaf spring. In addition, the spring force adjustment system may include an assembly that adjusts the mounting location of the spring (e.g., to the frame and/or to the arm/cutter bar assembly) to control bending and/or the effective length of the leaf spring.

In the illustrated embodiment, the actuator 418 of the arm assembly 400 is coupled to the element 218 of the frame 214 and to the arm 402. The actuator 418 is configured to urge the arm 402 to rotate in the upward direction 16, thereby urging the cutter bar assembly 202 to move upwardly along the vertical axis 14 relative to the soil surface. In the illustrated embodiment, the actuator 418 has a first end 424 coupled (e.g., rotatably coupled) to the frame element 218 (e.g., via a bracket), and the actuator has a second end 426 coupled (e.g., rigidly coupled) to the first end portion 414 of the arm 402. As previously discussed, the first end portion 414 is positioned opposite the second end portion 416, which is coupled to the cutter bar assembly 202. While the actuator 418 is coupled to the arm 402 at the first end portion 414 in the illustrated embodiment, in other embodiments, the actuator may be coupled to another suitable portion of the arm. For example, the actuator may be coupled to a central portion of the arm.

In the illustrated embodiment, the actuator 418 is a pneumatic cylinder or a hydraulic cylinder. In certain embodiments, the force applied by the pneumatic or hydraulic cylinder to the arm may be adjusted (e.g., by controlling fluid flow to/from the cylinder) to control movement of the arm (e.g., in response to interaction of the cutter bar assembly with the soil surface). While the actuator is a pneumatic or hydraulic cylinder in the illustrated embodiment, in other embodiments, the actuator may include any suitable device configured to urge (e.g., selectively urge) the arm 402 to rotate in the upward direction 16. For example, the actuator may include a spring (e.g., a coil spring, a leaf spring, a tension spring, a compression spring, etc.) configured to urge the arm to rotate in the upward direction. In such embodiments, the spring may be adjustable (e.g., the force applied by the spring may be adjustable) to control the force applied by the spring to the arm. Furthermore, the actuator may include multiple devices configured to urge the arm to rotate in the upward direction. For example, the actuator may include one or more pneumatic cylinders, one or more hydraulic cylinders, one or more springs, one or more other suitable biasing elements (e.g., a resilient element, an electromechanical actuator, etc.), or a combination thereof.

In the illustrated embodiment, the arm assembly 400 is coupled to the header frame 214 (e.g., the element 218 of the frame 214) only by the leaf spring 404 and the actuator 418. Accordingly, a pivot joint, which may be used in certain headers to pivotally couple an arm to the header frame, may be omitted. As a result, the time and complexity associated with positioning each arm relative to the header frame to establish a substantially straight cutter bar assembly (e.g., a cutter bar assembly having a substantially constant longitudinal position relative to the header frame) may be substantially reduced. For example, in headers that employ pivot joints to couple the arms to the header frame, the frame is machined to precisely locate each pivot joint on the frame to establish the substantially straight cutter bar assembly. However, in the illustrated embodiment, the longitudinal position of each arm may be adjusted by controlling the connection point between the leaf spring and the frame element to establish the substantially straight cutter bar assembly. For example, the frame element may include a slot configured to receive the leaf spring/frame element fastener 408. While the fastener is loose (e.g., and while the actuator is in a state that does not apply a force to the arm), the longitudinal position of the arm may be adjusted to establish the substantially straight cutter bar assembly. The fastener 408 may then be tightened to secure the arm the desired longitudinal position. The process of adjusting the position of each arm may be significantly less complex and time-consuming than precisely machining the header frame to locate the pivot joints. In addition, each pivot joint may include a bushing configured to reduce friction associated with pivoting of the arm. However, the bushings may be periodically replaced due to wear, which may be an expensive and time-consuming process. Accordingly, by omitting the pivot joints, maintenance operations on the header may be substantially reduced.

In certain embodiments, a lateral belt may extend over the leaf spring 404 (e.g., above the leaf spring 404 along the vertical axis 14) and below the arm 402 (e.g., along the vertical axis 14). For example, an inner surface of the lateral belt may contact a top surface of the leaf spring. In such a configuration, the shape of the lateral belt along the longitudinal axis 10 may substantially match the shape of the leaf spring 404 along the longitudinal axis 10. Accordingly, the shape of the leaf spring while the arm is in the lowered position may be particularly selected to establish a desired shape of the lateral belt. Furthermore, in embodiments in which the inner surface of the lateral belt contacts the top surface of the leaf spring, a coating (e.g., polymeric coating) may be applied to the top surface of the leaf spring to facilitate movement of the lateral belt.

While the actuator and the leaf spring are coupled to the same component of the header frame (e.g., the frame element 218) in the illustrated embodiment, in other embodiments, the actuator may be coupled to one component of the frame, and the leaf spring may be coupled to another component of the frame. Furthermore, while one arm assembly of the header is described above, the actuator/leaf spring connection between the arm and the header frame may be utilized with one or more other arm assemblies of the header. For example, in certain embodiments, each arm assembly of the header may utilize an actuator/leaf spring connection between the arm and the header frame. In addition, in certain embodiments, a header may include one or more arm assemblies 300 disclosed above with reference to FIG. 5 and/or one or more arm assemblies 400 disclosed above with reference to FIG. 6.

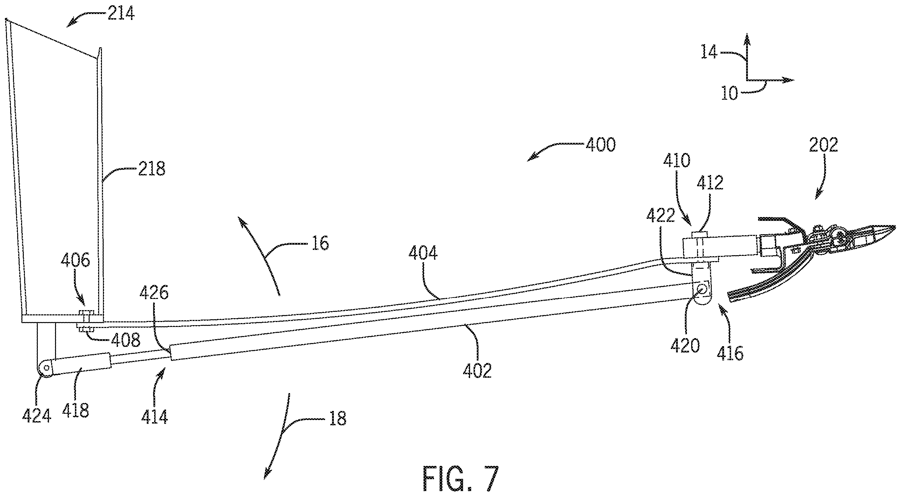

FIG. 7 is a side view of the arm assembly 400 of FIG. 6, in which the arm 402 of the arm assembly 400 is in a raised position. The arm 402 may be transitioned to the illustrated raised position in response to contact between the cutter bar assembly 202 and an obstacle within the field. As illustrated, the actuator 418 (e.g., a piston rod of the actuator) extends and the leaf spring 404 deforms in response to raising the arm 402 (e.g., the leaf spring 404 forms a concave shape along the longitudinal axis 10). Extension of the actuator 418, and in certain embodiments deformation of the leaf spring 404, establishes a force on the arm 402 in the downward direction 18, thereby driving the cutter bar assembly to reengage the soil surface. In embodiments in which the bottom surface of the lateral belt is in contact with the top surface of the leaf spring, the shape of the lateral belt may change in response to the deformation of the leaf spring (e.g., the lateral belt may have a concave shape along the longitudinal axis).

## Claims

1. An agricultural header (200), comprising:
a frame (214); and
an arm assembly (300, 400), comprising an arm (302, 402) configured to support a cutter bar assembly (202) of the agricultural header (200); and
an actuator (322, 418) coupled to the frame (214) and to the arm (302, 402), wherein the actuator (322, 418) is configured to urge the arm (302, 402) to move the cutter bar assembly (202) upwardly relative to a soil surface;
**characterized in that** the arm assembly (300, 400) is coupled to the frame (214) only by a leaf spring (304, 404) and the actuator (322, 418).

2. The agricultural header (200) of claim 1, wherein the leaf spring (304) has a first end (306) coupled to the frame (214), and the leaf spring (304) has a second end (310) coupled to a central portion (314) of the arm (302).

3. The agricultural header (200) of claim 2, wherein the leaf spring (304) has a bent portion (320) that enables the second end (310) to be angled about 75 degrees to about 100 degrees from the first end (306).

4. The agricultural header (200) of claim 1, wherein the leaf spring (404) has a first end (406) coupled to the frame (214), the leaf spring (404) has a second end (410) coupled to an end portion (416) of the arm (402), and the end portion (416) of the arm (402) is configured to couple to the cutter bar assembly (202).

5. The agricultural header (200) of claim 4, wherein the second end (410) of the leaf spring (404) is coupled to the end portion (416) of the arm (402) by a pivot joint (420).

6. The agricultural header (200) of any of claims 1-5, wherein the actuator (322, 418) comprises a pneumatic cylinder or a hydraulic cylinder.

7. The agricultural header (200) of any of claims 1-6, wherein the actuator (322, 418) has a first end (324, 424) coupled to the frame (214), the actuator (322, 418) has a second end (326, 426) coupled to a first end portion (316, 414) of the arm (302, 402), and the arm (302, 402) is configured to couple to the cutter bar assembly (202) at a second end portion (318, 416) of the arm (302, 402), opposite the first end portion (316, 414).

## Patentansprüche

1. Landwirtschaftlicher Erntevorsatz (200) mit:
einem Rahmen (214); und
einer Armanordnung (300, 400), die einen Arm (302, 402), der dazu eingerichtet ist, eine Messerbalkenanordnung (202) des landwirtschaftlichen Erntevorsatzes (200) zu tragen, und eine Betätigungseinrichtung (322, 418) umfasst, die mit dem Rahmen (214) und dem Arm (302, 402) gekoppelt ist, wobei die Betätigungseinrichtung (322, 418) dazu eingerichtet ist, den Arm (302, 402) derart anzutreiben, dass er die Messerbalkenanordnung (202) relativ zu einer Bodenoberfläche aufwärts bewegt;
**dadurch gekennzeichnet, dass** die Armanordnung (300, 400) mit dem Rahmen (214) nur über eine Blattfeder (304, 404) und die Betätigungseinrichtung (322, 418) gekoppelt ist.

2. Landwirtschaftlicher Erntevorsatz (200) nach Anspruch 1, wobei die Blattfeder (304) ein erstes Ende (306) aufweist, das mit dem Rahmen (214) gekoppelt ist, und wobei die Blattfeder (304) ein zweites Ende (310) aufweist, das mit einem zentralen Abschnitt (314) des Arms (302) gekoppelt ist.

3. Landwirtschaftlicher Erntevorsatz (200) nach Anspruch 2, wobei die Blattfeder (304) einen gebogenen Abschnitt (320) aufweist, der dem zweiten Ende (310) ermöglicht um etwa 75° bis etwa 100° zu dem ersten Ende (306) abgewinkelt zu sein.

4. Landwirtschaftlicher Erntevorsatz (200) nach Anspruch 1, wobei die Blattfeder (404) ein erstes Ende (406) aufweist, das mit dem Rahmen (214) gekoppelt ist, wobei die Blattfeder (404) ein zweites Ende (410) aufweist, das mit einem Endabschnitt (416) des Arms (402) gekoppelt ist, und wobei der Endabschnitt (416) des Arms (402) dazu eingerichtet ist, an die Messerbalkenanordnung (202) gekoppelt zu sein.

5. Landwirtschaftlicher Erntevorsatz (200) nach Anspruch 4, wobei das zweite Ende (410) der Blattfeder (404) an den Endabschnitt (416) des Arms (402) über ein Drehgelenk (420) gekoppelt ist.

6. Landwirtschaftlicher Erntevorsatz (200) nach einem der Ansprüche 1 bis 5, wobei die Betätigungseinrichtung (322, 418) einen Pneumatikzylinder oder einen Hydraulikzylinder umfasst.

7. Landwirtschaftlicher Erntevorsatz (200) nach einem der Ansprüche 1 bis 6, wobei die Betätigungseinrichtung (322, 418) ein erstes Ende (324, 424) aufweist, das mit dem Rahmen (214) gekoppelt ist, wobei die Betätigungseinrichtung (322, 418) ein zweites Ende (326, 426) aufweist, das mit einem ersten Endabschnitt (316, 416) des Arms (302, 402) gekoppelt ist, und wobei der Arm (302, 402) dazu eingerichtet ist, an die Messerbalkenanordnung (202) in einem zweiten Endabschnitt (318, 416) des Arms (302, 402) gegenüber dem ersten Endabschnitt (316, 414) gekoppelt zu sein.

## Revendications

1. Un organe de coupe agricole (200) comprenant :
un châssis (214) ; et
un ensemble bras (300, 400), comprenant un bras (302, 402) configuré pour soutenir un ensemble barre de coupe (202) de l'organe de coupe agricole (200) ; et un actionneur (322, 418) couplé au châssis (214) et au bras (302, 402), dans lequel l'actionneur (322, 418) est configuré pour solliciter le bras (302, 402) afin de déplacer l'ensemble barre de coupe (202) verticalement par rapport à une surface du sol ;
**caractérisé en ce que** l'ensemble bras (300, 400) est couplé au châssis (214) uniquement par un ressort à lames (304, 404) et l'actionneur (322, 418).

2. L'organe de coupe agricole (200) selon la revendication 1, dans lequel le ressort à lames (304) dispose d'une première extrémité (306) couplée au châssis (214), et le ressort à lames (304) dispose d'une seconde extrémité (310) couplée à une partie centrale (314) du bras (302).

3. L'organe de coupe agricole (200) selon la revendication 2, dans lequel le ressort à lames (304) présente une partie coudée (320) qui permet d'incliner la seconde extrémité (310) entre environ 75 degrés et environ 100 degrés par rapport à la première extrémité (306).

4. L'organe de coupe agricole (200) selon la revendication 1, dans lequel le ressort à lames (404) dispose d'une première extrémité (406) couplée au châssis (214), le ressort à lames (404) dispose d'une seconde extrémité (410) couplée à une partie finale (416) du bras (402), et la partie finale (416) du bras (402) est configurée pour être couplée avec l'ensemble barre de coupe (202).

5. L'organe de coupe agricole (200) selon la revendication 4, dans lequel la seconde extrémité (410) du ressort à lames (404) est couplée à la partie finale (416) du bras (402) par un joint de pivot (420).

6. L'organe de coupe agricole (200) selon l'une quelconque des revendications 1 à 5, dans lequel l'actionneur (322, 418) comprend un vérin pneumatique ou un vérin hydraulique.

7. L'organe de coupe agricole (200) selon l'une quelconque des revendications 1 à 6, dans lequel l'actionneur (322, 418) dispose d'une première extrémité (324, 424) couplée au châssis (214), l'actionneur (322, 418) dispose d'une seconde extrémité (326, 426) couplée à une première partie finale (316, 414) du bras (302, 402), et le bras (302, 402) est configuré pour être couplé avec l'ensemble barre de coupe (202) au niveau d'une seconde partie finale (318, 416) du bras (302, 402), opposée à la première partie finale (316, 414).
